# EUROPEAN PATENT APPLICATION

(11) **EP 3 252 885 A1**
(43) Date of publication of application: **06.12.2017**
(21) Application number: 17173904.8
(22) Date of filing: 01.06.2017
(51) Int. Cl.: H01R 31/06, H01R 24/58, H01R 27/02

(54) **MOBILE DEVICE CHARGER WITH AUDIO INTERFACE**

(30) Priority: 02.06.2016 US 201615171948
(71) Applicant: Scosche Industries, Inc., Oxnard, CA 93033 (US)
(72) Inventor: TREJO, Kevin Michael, OXNARD, CALIFORNIA 93033 (US)
(74) Representative: Studio Torta S.p.A.

(57) **Abstract**

A device for converting the digital audio signal of a digital device in to an analog audio signal in a vehicle includes a digital audio input jack, a digital to analog converter, a preamplifier, and an analog audio jack. The digital audio port is configured to provide power to a digital audio device connected thereto, and the digital audio signal from the digital audio device is passed to a digital to analog convertor, and then to an analog audio jack. A cable connected to the analog audio jack carries the signal to an input of a vehicle stereo system.

## Description

### BACKGROUND

### 1. Technical Field

The present disclosure relates generally to electrical connectors for power and data interconnections of electronic devices, and more particularly, to power and data connections for automobile stereos and mobile devices.

### 2. Related Art

Multi-function electronic devices such as smartphones and tablets are widely used. One of the most common functions of these devices is to play back audio content such as music, audiobooks, podcasts, and the like. There are also purpose-made devices which perform this function exclusively, also known in the art as portable music players. Unlike smartphones in which the audio playback functionality is accessed by invoking one of multiple software applications installed on the device, portable music players have a more direct interface to selecting the audio playback controls, some of which may be provided as hardware inputs. Many smartphones include a speaker through which audio may be played back, but almost all smartphones and portable media players alike include headphone jacks, to which headphones, earphones, and the like may be connected.

Although safe driving requires considerable attention, it is not so mentally taxing that it must be done without any distractions. Indeed, due to the oftentimes monotonous nature of driving to anywhere but the shortest of distances, many welcome the diversion of music and other audio programming. While this may be possible with a radio, or a compact disk player/ changer, many have become accustomed to the aforementioned portable electronic devices, namely smartphones, for music/audio program storage, cataloging, and playback. Thus, recently there has been an increasing preference for connecting such devices to the audio system in automobiles. While many recent models of automobiles, as well as high-end, fully featured models feature external device connectivity, many vehicles still on the road do not. Several different connectivity modalities are typically available, including wireless connections via Bluetooth®, as well as wired connections via Universal Serial Bus (USB) interfaces and tip-ring-sleeve (TRS) jacks.

Wireless connectivity, however, is less reliable than wired connectivity and can be difficult to manage. Pairing the Bluetooth node e.g., the mobile device, to the base station installed in the automobile is a cumbersome process, and the data transmission link is prone to disconnecting.

Thus, many users choose to connect the devices via a standard audio jack built in to the stereo system installed in the automobile. A typical connection involves the standard audio jack of the car stereo, a male to male audio patch cable, and the headphone jack of the mobile device.

However, not every mobile device has a stereo audio jack, and an audio jack is not necessarily included in every vehicle audio system. Some mobile devices have a single external output, which may be a standard data interconnect such as USB, mini USB, or micro USB ports. Others, such as the Apple iPhone, may utilize a proprietary connection known as the Lightning connector, which require matching proprietary plug and port.

In any implementation of digital audio, a digital-to-audio converter (DAC) is necessary to translate the stream of data representative of the soundwaves to an analog signal that is transduced by the loudspeaker to sound. The mobile device includes such a DAC integrated circuit, and the analog signal therefrom is output to the audio jack. For instance, a stereo analog audio signal that drives a pair of headphones or loudspeakers are comprised of two sets of voltages, with one set representing the signal for the left channel, and the other set representing the signal for the right channel. The frequency of the voltages is varied to yield the audio signal.

These voltages are transferred through the tip and ring of a standard 3.5mm stereo audio connector and corresponding jack, with the ground being on the sleeve of the connector and jack.

It may also be possible to directly output or stream the digital data corresponding to the audio signal to the aforementioned data interconnects (USB, and variants thereof, Lighting, etc.). The analog audio signal is reconstituted from the digital data after transmission through the cable or interconnect. Proprietary connectors use several pins in a predetermined, or a dynamic configuration. For instance, the Apple Lighting connector uses eight pins, and the function of the pins may vary depending on the devices that are connected. The connector may or may not have an analog audio breakout to two of the pins as part of the proprietary standard. When the proprietary connector lacks an analog audio breakout, any connecting device used to receive audio from the digital device must have a DAC integrated circuit.

Thus, where the mobile device is limited to a proprietary external connection, and the breakout scheme for signals from the device across the different pins of the port does not accommodate an analog audio signal, a digital to analog converter on the cable, an adapter, or on a device on the opposite end of the cable to convert the digital signal to an analog audio signal.

### BRIEF SUMMARY

The embodiments of the present disclosure are directed to a device for converting an audio signal. The device may include a housing defined by a distal portion and a proximal portion.

Additionally, there may be a power interface that is integrated in to the distal portion of the housing. The power interface may be receptive to power from a direct current power source. The device may also include a digital audio port integrated in to the housing and in electrical communication with the power interface. Furthermore, there may be a digital to analog converter with an input that is connected to the digital audio port, as well as an output. The digital to analog converter may be receptive to a digital signal from the digital audio port. The device may further include an analog audio jack that is integrated in to the housing and connected to the output of the digital to analog converter. The analog audio jack may be receptive to an analog signal from the digital to analog converter. With the digital device connected to the digital audio port, the power from the power interface is relayed to the digital device via the digital audio port, and concurrently, the digital signal being received on the digital audio port from the digital device is relayed to the input of the digital to analog converter.

Additionally disclosed is a method for forming an adapter to play digital audio files on an analog stereo, comprising, forming a housing having a substantially cylindrical distal portion and integrating a power interface with the housing, the power interface comprising at least one contact and a pin, the power interface configured to provide power. Then, forming a digital audio port in the housing, connecting the digital audio port to a digital to analog converter, the digital to analog converter being located in the housing, and connecting the digital to analog converter to an analog audio jack formed in the housing. The power interface provides power to the digital audio port.

### BRIEF DESCRIPTION OF THE DRAWINGS

These and other features and advantages of the various embodiments disclosed herein will be better understood with respect to the following description and drawings, in which like numbers refer to like parts throughout, and in which:
FIG. 1A shows a perspective view of an exemplary embodiment of the adapter device;
FIG. 1B shows a side view of a distal portion of the adapter device;
FIG. 2 shows a perspective view of an exemplary analog audio cable;
FIG. 3 shows a plan view of an exemplary digital cable; and
FIG. 4 shows a schematic block diagram of an exemplary embodiment of the adapter device.

### DETAILED DESCRIPTION

The detailed description set forth below in connection with the appended drawings is intended as a description of the presently preferred embodiment of a multiple plug adapter, and is not intended to represent the only form in which it can be developed or utilized. The description sets forth the functions for developing and operating the adapter in connection with the illustrated embodiments. It is to be understood, however, that the same or equivalent functions may be accomplished by different embodiments that are also intended to be encompassed within the scope of the present disclosure. It is further understood that the use of relational terms such as first, second, distal, proximal, and the like are used solely to distinguish one from another entity without necessarily requiring or implying any actual such relationship or order between such entities.

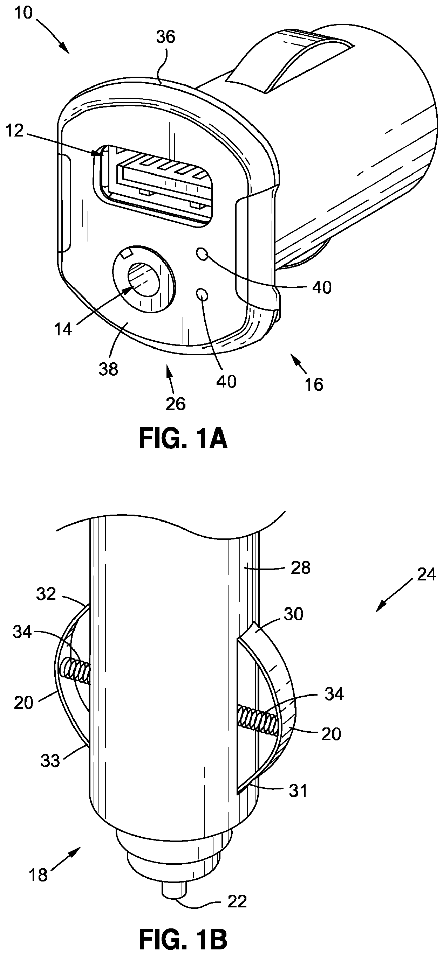

FIGs. 1A and 1B depict one embodiment of an adapter device 10, which couples a digital audio port 12 and an analog audio jack 14 as contemplated by the present disclosure. The digital audio port and analog audio jack are mounted in a housing 16 including a distal portion 24 and a proximal portion 26. The adapter device 10 further includes a power interface 18 for providing power. The power interface 18 includes a pair of contacts 20 and a pin 22 for connecting to an automobile power source (not shown), such as a lighter socket or dedicated 12V DC power socket. The distal portion 24 of the housing is generally cylindrical in shape to correspond to the lighter socket or DC power socket. The contacts 20 are mounted on opposite points of a cylindrical wall 28 of the housing and extend longitudinally along the cylindrical wall. The contacts 20 are biased outwardly from the cylindrical wall by imparting a curve or bow to the contact, such that two opposing ends 30, 31 and 32, 33 of the contacts are each connected to the housing, and the remainder of the contact extends radially away from the housing. The contact is radially furthest away from the housing at its midpoint. In some embodiments, the contact 20 is additionally biased by a coil spring 34. One end of the coil spring biases against an interior side of the midpoint of the contact, and an opposite end of the coil spring bias against an exterior surface of the cylindrical wall 28. Further, the pin 22 may also be biased by a biasing element the place the pin it its furthest extended position. The biasing of the pin in this manner creates a better electrical connection between the pin and the lighter socket or DC power socket.

In the embodiment shown in FIG. 1A, a proximal portion 26 of the housing is generally parallelepiped in shape, though this is by way of example only and not of limitation. In one embodiment, when oriented in its in-use orientation, the top edge 36 and bottom edge 38 of the parallelepiped are curved. In other embodiments, the proximal portion 26 of the housing 16 may be any shape which will accommodate the digital audio port 12 and the analog audio jack 14, and any other potential parts, such as indicator light emitting diodes, which are discussed in detail below, placed on and/or in the proximal portion. The housing may be made of any molded material which provides the structural strength to mount the digital audio port 12, the analog audio jack 14, and to form the power interface 18. The digital audio port 12 and analog audio jack 14 may be placed on a single side of the housing or may be placed on opposing sides, or adjacent sides. As will be discussed in further detail below, the interior of the adapter includes additional components to allow the proper passing of the audio from a digital audio connection to an analog audio connection.

The housing may also include other features, such as light emitting diodes (LED) 40. The LED 40 may be used to signal a user of various conditions or functions. For example, the LED 40 may be connected to a power supply portion of the circuit internal to the housing. This LED 40 would light when power was connected to the adapter, notifying the user of this condition. The LED 40 may also be programmed to flash to indicate that either or both of the digital audio port or the analog audio jack are not connected to a corresponding connector. Alternatively, the LED 40 may change color to indicate different statutes. For example, when the adapter is connected to power, but either or both of the digital audio port or the analog audio jack are not connected to a corresponding connector, the LED 40 may be red. When either the digital audio port or the analog audio jack are connected to a corresponding connector, the LED 40 may turn green. Any colors may be chosen and those given are by example only. In other embodiments, a plurality of LEDs 40 of the same or different colors may be used in the same manner. For example, there may be an individual LED 40 for each of indicated the connection to power, to a connector in the digital audio port, and a connector in the analog audio jack, or just for indicating active connections in the digital audio and analog audio jacks. Additionally, these two LEDs 40 could both be, for example, red when the adapter is powered, but there is no connection, and could change, for example, to green when the connectors corresponding to the port or jack are connected.

Alternatively or additionally, in some embodiments the digital audio port 12 is fitted with a light source. In these embodiments, the light may be directed to an internal surface of the digital audio port so that the digital audio port appears to glow. The light in the digital audio port 12 makes the port easier to find in low light situations, such as when operating the vehicle at night.

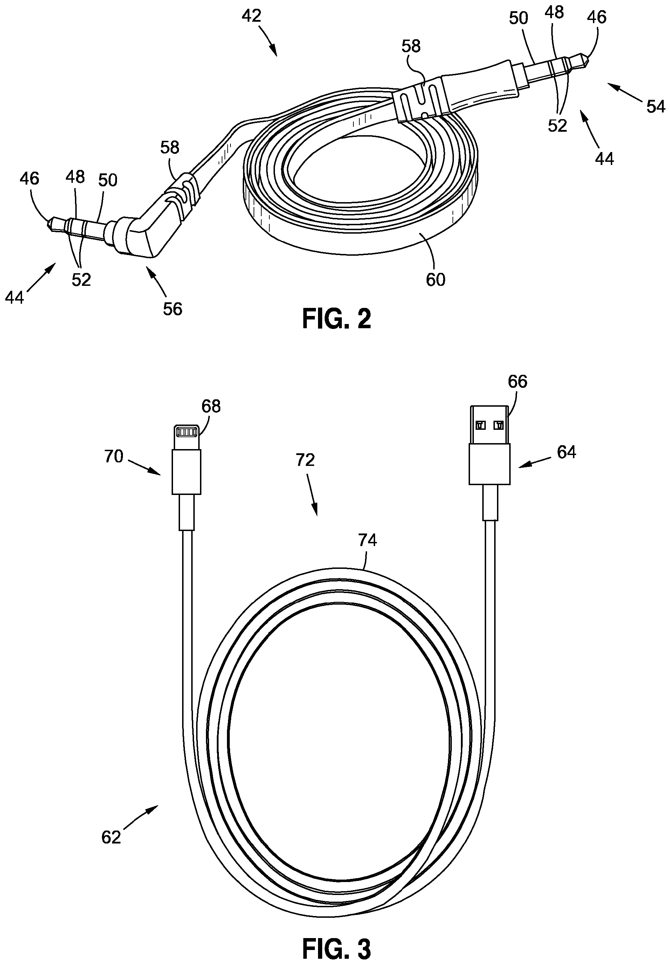

FIG. 2 depicts one embodiment of an analog audio connector cable 42. On either end of the analog audio connector cable are connectors 44. In one embodiment the connectors are 3.5mm stereo jacks. In other embodiments the connectors may be of various sizes and configurations. In the 3.5mm stereo jacks, the signal is passed along a tip 46, a ring 48, and a sleeve 50 of the connector. Thus, this type of connector is commonly called a TRS connector.

The 3.5 mm connectors are also known as 1/8 inch connectors. The connectors may be any of a number of sizes, for example, ¼ inch or 2.5mm in addition to 3.5mm or 1/8 inch connectors.

Each of these components is separated by a band of electrical insulating material 52. A first connector 54 is a straight connector, and a second connector 56 is a right angle connector. In other embodiments, both connectors may be straight or right angle connectors, or may be 45 degree connectors, or any other shape of connector. In between the connector and the cable are strain relief elements 58, which reduce the stress that may occur in the cable from bending at larger angles to accommodate the placement of the opposite end of the cable, or an intermediate cable path. The wire itself is insulated by an outer shell 60 of non-conductive material, and is what is called a "flat" cable, in that it has a rectangular cross section that is much greater in width than height. In other embodiments, the cable may be round in cross section, or have any other cross section to accommodate the desired type and grade of wire. In some embodiments, one end of the analog audio connector cable may be integrated with the adapter, rather than the adapter having an analog audio jack for connecting a separate cable. In these embodiments, the analog audio cable extending from the adapter may include a strain relief element at the point of connection of the cable to the housing.

FIG. 3 shows an exemplary embodiment of a digital audio cable 62. In this example, one end 64 of the cable has a Universal Serial Bus (USB) connector 66 for connecting to a USB port. A digital device connector 68 on the other end 70 may be proprietary connector or may include a connector which conforms to an industry-recognized standard. As shown, the digital device connector is the proprietary Lighting® connector from Apple®. In other embodiments, the digital device connector could be a mini USB connector, or a standard USB connector, or a 20 pin Samsung® phone connector, or and 18 pin Samsung® phone connector, or an 18 pin LG® connector, or a 12 pin SonyEricsson® connector, or any other connector used by a digital device which plays digital audio files. The wire 72 connecting the two connectors is insulated through the incorporation of a non-conducting shell 74, and the cable wire is of sufficient grade and type to pass a clean, or sufficiently high signal-to-noise ratio, signal from one connector to the other.

In some embodiments, one end of the digital audio connector cable may be integrated with the adapter, rather than the adapter having a digital audio port for connecting a separate cable. In these embodiments, the digital audio cable extending from the adapter may include a strain relief element at the point of connection of the cable to the housing. The cable may further include a universal mount on the opposite end, where various adapter tips may be singularly mounted, in order to accommodate various proprietary and industry-standard connections.

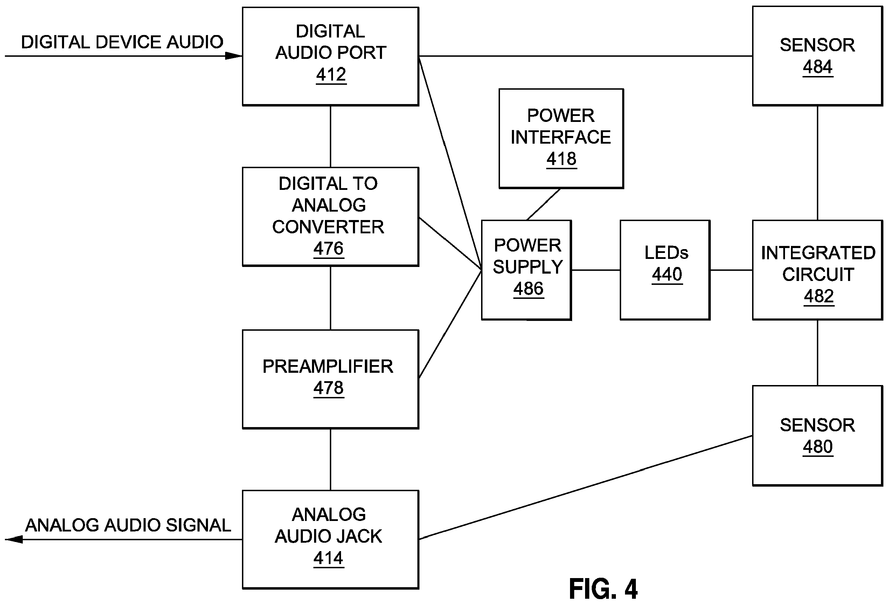

Referring now to FIG. 4, a block diagram of the adapter device is shown. A digital audio cable as disclosed brings a digital audio signal in from a digital device (not shown). The cable terminates on one end in a USB connector which connects to a digital audio port 412 on the adapter. The digital audio port 412 of the adapter device conforms to the Universal Serial Bus standard, and includes attendant data+, data-, identifier, power (VCC) and ground lines and connectors therefor. Additionally, in some embodiments, the digital audio port in connected to a power supply 486 in the adapter device to provide pass through power to the digital device connected to the adapter device via the digital audio port. The digital audio port is connected to a digital to analog converter 476.

The digital to analog converter (DAC) is a circuit which receives a digital signal, which approximates, as closely as possible, binary data. As is well known in the art, given proper bit check and other integrity protocols, digital data can be transmitted, manipulated and stored without degradation. However, in order to drive an earphone or loudspeaker amplifier such as that found in a typical analog stereo system, the digital signal must be converted to an analog signal. The analog signal varies the frequency of a current, charge, or voltage to create the signal required for driving the headphones or for creating a signal which can be further amplified.

There are several DAC architectures known in the art. The suitability of any specific architecture for a specific use is determined by a plurality of parameters, with some of the main parameters including physical size, power consumption, resolution, speed, accuracy, and cost. Due to the complexity and need for precisely matched components, all but the most specialist DACs are implemented as integrated circuits. With an audio DAC, speed and resolution are primary factors, and typically a lower speed, high resolution DAC is used for audio applications.

The DAC receives the digital signal provided and updates the voltage at uniform sampling intervals. These sampled voltages are then interpolated via a reconstruction filter to produce continuously varied voltage levels. For analog stereo applications, two channels of continuously varied voltage levels corresponding to a left channel signal and a right channel signal are output of the DAC.

In some embodiments, the output characteristics of the DAC require that the output analog signal receives some amount of amplification before being output to the analog audio jack, and therefore, the analog signal is output to a amplification circuit or pre-amplifier 478.

Amplification of a signal close to the input, such as in this case, is typically referred to as pre-amplification. The pre-amplifier 478 is used to boost the signal strength in order for the signal to drive the cable to the main amplifier without significantly degrading the signal-to-noise ratio.

The pre-amplification circuit can be an integrated circuit, such as an op-amp, or a transistor-based integrated circuit. In still other embodiments, a pre-amplification circuit may be integrated to the DAC.

The DAC or pre-amplification output is connected to an analog audio jack 414. The analog audio jack accepts an analog audio connector with a tip, ring, and sleeve configurations as described earlier. The analog audio jack has corresponding connectors for each of the tip, ring and sleeve of the analog audio connector. These tip ring, and sleeve analog audio connectors collectively carry an unbalanced stereo signal. A right channel signal and a left channel signal are carried essentially interchangeably, one channel signal on the tip, the other channel signal on the ring. Ground is typically carried on the sleeve. In some embodiments, the analog audio jack is a board mounted analog audio jack. Board-mounted versions of the analog audio jack a housing typically has five pin connectors. One pin connector is dedicated to the tip, one to the ring, and one to the sleeve, with two pin connectors left undedicated. When no connector is inserted to the jack, an internal switch connects the tip and ring pins to the adjacent undedicated pins, allowing connector insertion detection. Thus, there is a sensor 480 integrated with the board mounted analog audio jack 414. The board-mounted analog audio jack may then be connected to LEDs 440 as discussed herein to provide a user indication that the analog audio jack is connected to an analog audio connector.

Alternatively, the sensor 480 can be a separate circuit. The sensor may be connected to an integrated circuit 482 which contains logic which operates the LEDs 440 in the manner disclosed for the LEDs 40 herein. The digital audio port 412 may also be connected to a sensor 484 similar to the one connected to or integrated with, the analog audio jack. The sensor 484 also operates to send insertion detection or non-detection signals to the integrated circuit 482. The integrated circuit may then control at least one LED in relation to the status of the connection at the digital audio port.

The opposite end of the analog audio cable connects to a corresponding input jack on an audio system. The audio system, may, for example, be part of a vehicle such as an automobile, boat, or airplane (not shown).

Each of the respective components requiring power receives power from a power supply 486 which is in turn connected to a power interface 418, the power interface receiving power from a connection with the vehicle.

The above description is given by way of example, and not limitation. Given the above disclosure, one skilled in the art could devise variations that are within the scope and spirit of the invention disclosed herein, including various ways of notifying a user that the signal path has been completely connected. Further, the various features of the embodiments disclosed herein can be used alone, or in varying combinations with each other and are not intended to be limited to the specific combination described herein. Thus, the scope of the claims is not to be limited by the illustrated embodiments.

## Claims

1. A device for converting an audio signal from a digital device, comprising:
a housing defined by a distal portion and a proximal portion;
a power interface integrated in to the distal portion of the housing, the power interface being receptive to power from a direct current power source;
a digital audio port integrated in to the housing and in electrical communication with the power interface;
a digital to analog converter with an input connected to the digital audio port and an output, the digital to analog converter being receptive to a digital signal from the digital audio port; and
an analog audio jack integrated in to the housing and connected to the output of the digital to analog converter, the analog audio jack being receptive to an analog signal from the digital to analog converter;
wherein with the digital device connected to the digital audio port, the power from the power interface is relayed to the digital device via the digital audio port, and concurrently, the digital signal being received on the digital audio port from the digital device is relayed to the input of the digital to analog converter.

2. The device of Claim 1, wherein the analog audio jack is a 3.5mm stereo adapter jack.

3. The device of Claim 1, wherein the analog audio jack receives signals through connectors to the tip and ring of an analog audio connector.

4. The device of Claim 1, further comprising:
an amplifier circuit, the analog signal output from the digital to analog converter being amplified thereby.

5. The device of Claim 1, wherein the distal portion is substantially cylindrical, and the proximal portion defines a flat face.

6. The device of Claim 5, wherein the digital audio port and the analog audio jack are disposed in the proximal portion.

7. The device of Claim 6, wherein the digital audio port and the analog audio jack are disposed on the same side of the proximal portion.

8. The device of Claim 6, wherein the digital audio port and the analog audio jack are disposed on opposite sides of the proximal portion.

9. The device of Claim 1, wherein the power interface includes at least one contact and a pin.

10. The device of Claim 9, wherein the at least one contact is biased radially outward at the midpoint of the contact.

11. The device of Claim 9, wherein the pin is biased in the distal direction.

12. A method for forming an adapter to play digital audio files on an analog stereo, comprising:
forming a housing having a substantially cylindrical distal portion;
integrating a power interface with the substantially cylindrical distal portion of the housing, the power interface comprising at least one contact and a pin, the power interface configured to provide power when in contact with a corresponding direct current socket;
forming a digital audio port in the housing;
connecting the digital audio port to a digital to analog converter, the digital to analog converter being located in the housing;
connecting the digital to analog converter to an analog audio jack formed in the housing;
providing, via the power interface, power to the adapter.
